# EUROPEAN PATENT APPLICATION

(11) **EP 0 934 817 A2**
(43) Date of publication of application: **11.08.1999**
(21) Application number: 98830750.0
(22) Date of filing: 11.12.1998
(51) Int. Cl.: B29C 70/68

(54) **Method of making articles from thermoplastic material with an insert**

(30) Priority: 04.02.1998 IT TO980088
(71) Applicant: C.M.C. Costruzioni Elettromeccaniche Cavour S.r.l., 10061 Cavour (Torino) (IT)
(72) Inventor: Bosco, Giovanni, 10040 Rivalta (Torino) (IT)
(74) Representative: Buzzi, Franco

(57) **Abstract**

Method for the manufacturing of a co-moulded article (1) including at least one metallic component (5a-5d) embodied within or covered by a body of moulded thermoplastic material (2), comprising the step of providing a prefabricated mounting member (6) relatively to which the or each metallic component (5a-5d) is positioned and fixedly secured. The sub-assembly (16) thus prefabricated is introduced into the mould within which the body of thermoplastic material (2) is then co-moulded.

## Description

The present invention is related to the manufacturing of co-moulded articles including one or more metallic components embodied within or covered by a body of moulded thermoplastic material.

Traditionally the technology for the production of such co-moulded articles includes placing the metallic components into the cavity of the mould and retaining thereof in the desired position. The thermoplastic material is then injected into the mould and thus moulded over the metallic components.

Placing the metallic components within the mould as a rule is carried out manually by specialized personnel: this operation is anything but easy whenever the article comprises several metallic components, and anyway it requires relatively long stops of the moulding equipment.

Moreover, following their placing within the mould cavity, the metallic components have to be kept in the correct position by suitable retaining systems which the mould is equipped with: these systems are normally made of pins arranged in pressure contact against the metallic components within the mould cavity. The presence of these pins evidently involves generation of small holes across the thickness of the thermoplastic material body in the finished co-moulded articles. In turn, the presence of these holes may involve structural problems in use of the co-moulded article, and is critical, and thus absolutely undesired, in case the co-moulded article consists for instance of a functional element of an electrical machine. Actually the small holes provide access passageways, towards the metallic components embodied within the body of moulded plastic material, of humidity and water which may jeopardize correct operation of the electrical machine.

In order to provide a solution to the above problems, it has been already proposed to produce such co-moulded articles in two successive steps, namely by a first co-moulding operation in which the metallic components are fixedly joined to one another following moulding thereover of a first body of plastic material, and the assembly thus obtained is then introduced into a second mould for moulding the final article body thereover.

This solution involves additional costs in connection with the equipment to perform the first co-moulding operation and does not allow increasing the production rates, which are instead further slowed down.

The object of the present invention is to provide a simple, economical and efficient solution to the above-referenced drawbacks.

More particularly, the object of the present invention is to provide a method and device for the manufacturing of co-moulded article of the type set forth in the beginning which on one side enables to enhance the production rates, suppressing the difficulties and the stops which are traditionally necessary for positioning the metallic components into the co-moulding apparatus, and on the other side prevents formation of critical passageways across the thermoplastic material body of the co-moulded article.

According to the invention, this object is achieved by virtue of the provision of a prefabricated mounting member designed for the positioning and holding of said at least one metallic component so as to define therewith a pre-assembled subassembly to be inserted into the cavity of said co-moulding mould.

Due to this idea of solution the metallic components of the co-moulded articles can be conveniently pre-mounted along with the related prefabricated mounting members outside of the co-moulding line. The subassemblies constituted by the metallic components retained within the related prefabricated mounting members are then in turn fitted into the co-moulding mould, even in a mechanized way and without any need of manual intervention thus affording high production rates, and normally also without any need to resort to the traditional retaining pins within the mould cavity. Actually the prefabricated mounting member may be arranged so as to be provided of self-positioning portions within the mould, or alternatively so that the metallic components retained thereby are positioned so as to be self-bearing. In any way, even if positioning pins might be necessary, the holes generated thereby across the thermoplastic material body moulded over the metallic components would not reach anyway these metallic components, which are in fact isolated due to the presence of the prefabricated mounting member. As a consequence, the co-moulded articles manufactured by the method according to the invention are perfectly adapted for use in electrical machines and the like application.

The prefabricated mounting member is conveniently formed with positioning seats for the metallic components, and may be further provided with snap-fit locking means of said metallic components.

According to a preferred embodiment of the invention, the prefabricated mounting member is constituted by two substantially sheet-like symmetrical portions designed to be mutually superimposed and snap-fit coupled following insertion of the metallic component therebetween.

Additional features and advantages of the invention will become apparent from the following detailed description, with reference to the accompanying drawings purely provided by way of non limiting example, in which:
- Figure 1 is a diagrammatic perspective view showing an example of a co-moulded article according to the invention,
- Figure 2 is a diagrammatic perspective view of a sub-assembly of the co-moulded article of figure 1, and
- Figure 3 is an exploded perspective view of the sub-assembly of figure 2.

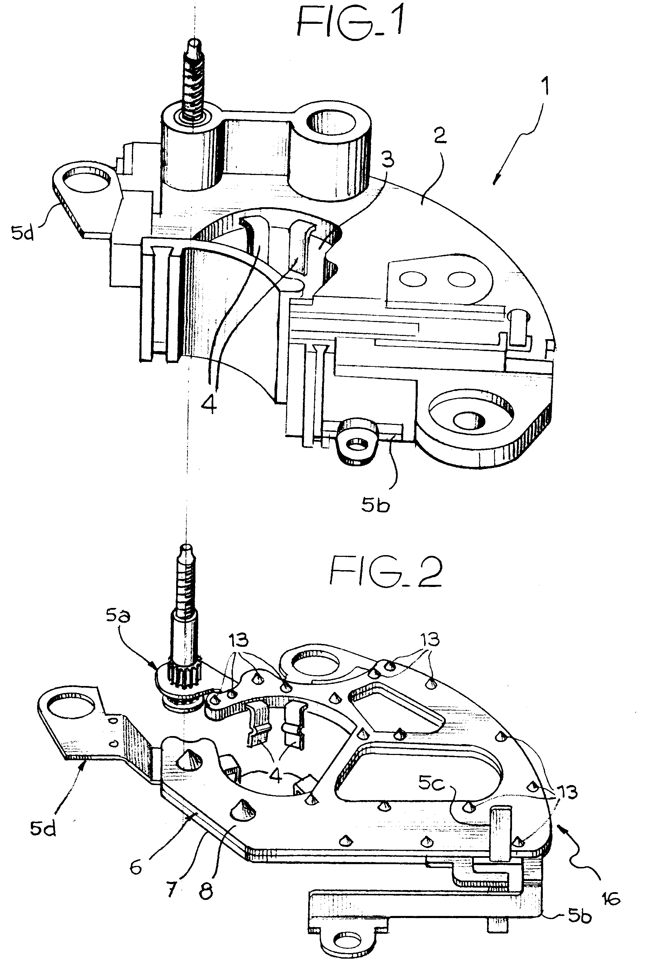

In figure 1, reference numeral 1 generally designates a co-moulded article according to the invention, which in the case of the shown example is constituted by a motor-vehicle alternator component. The shown example is purely indicative, since the invention can be advantageously applied to any co-moulded article including at least one metallic component covered by or embodied within a moulded plastic material body.

In the case of the shown example, the alternator element 1 comprises in fact a body of moulded thermoplastic material 2 within which a plurality of metallic components, which shall be disclosed in more detail in the following, are embodied so as to be partially exposed into a central opening 3 of the thermoplastic material body 2 so as to define a number of segments 4 which, in use, act as welding pins for a power transistor.

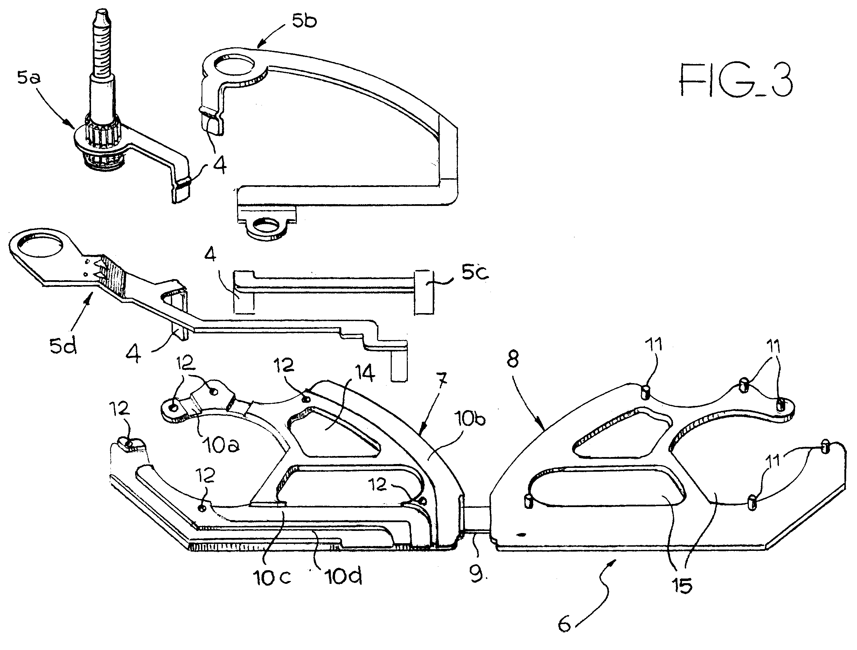

Referring now to figure 3, in the case of the shown example the metallic components comprise four shaped metallic plates 5a, 5b, 5c, 5d each of which is integrally formed with a respective welding pin 4 and whose positioning within the body of moulded plastic material 2 is rigidly set.

To this effect the invention contemplates provision of a prefabricated mounting member generally designated as 6 in figure 3, by means of which the metal plates 5a-5d are positioned and mutually fixed prior to their introduction into the co-moulding mould of the thermoplastic material body 2

In general, the prefabricated mounting member 6 is constituted by a single piece of moulded plastic material, formed by two specularly symmetrical substantially sheet-like portions 7,8 pivotally connected to each other through an intermediate flexible hinge 9 so as to allow mutual rotation thereof between an open extended position shown in figure 3 and a superimposed closed position shown in figure 2.

One or both sheet-like portions 7,8 may be formed in correspondence of their inner faces with positioning seats of the metallic components of the co-moulded article: in the case of the shown example the inner face of the sheet-like portion 7 is provided with recesses or depressions 10a,10b,10c,10d whose design is complementary to the shape of corresponding parts of the plates 5a,5b,5c,5d intended to be engaged, by a shape- or restrained- or snap-fit coupling within these depressions.

The inner faces of the two sheet-like portions 7,8 are further formed one with integral pins 11 and the other with corresponding recesses 12 designed to perform a mutual snap-fit engagement when the portion 8 is rotated and superimposed onto the portion 7, so as to firmly retain the plates 5a-5d fitted therebetween. Moreover the two sheet-like portions 7,8 are provided with corresponding through apertures 14,15 to enhance, upon the subsequent co-moulding operation, compenetration with the thermoplastic material injected into the mould.

The outer surfaces of the two sheet-like portions 7,8 of the mounting member 6 may be conveniently formed with respective integral projections 13, or equivalent expedients, so as to further improve on one side compenetration of the thermoplastic material forming the body 2 during the co-moulding operation, and on the other side to enable positioning within the co-moulding cavity without any need to employ traditional retaining systems. Accordingly the sub-assembly designated as 16 in figure 2, and constituted by the mounting member 6 together with the metal plates 5a-5d fixedly secured therewith, can be self-bearing.

Manufacturing of the co-moulded article 1 is performed as follows.

The mounting member 6, separately manufactured for instance by injection moulding, is placed in correspondence of a pre-assembling station at which the metal plates 5a-5d are properly positioned (manually or even in a mechanized way) and coupled with the respective depressions 10a-10d of the sheet-like portion 7. Then the sheet-portion 8 is overturned through the hinge 9 and closed onto the sheet-like portion 7, so as to perform mutual snap-fit closing therebetween owing to engagement between the pins 11 and the recesses 12.

The sub-assembly 16, thus pre-assembled outside the co-moulding line, is then introduced into the mould cavity and held therein in the proper position either autonomously, as pointed out by means of the projections 13 or suitable equivalent appendages, or by means of any traditional retaining system.

Following closure of the mould, co-moulding is performed thus embodying the sub-assembly 16 within the injected thermoplastic material forming the body 2.

It will be apparent from the foregoing that provision of the prefabricated mounted member 6 enables remarkably increasing the production rates of the co-moulding equipment, by virtue of the fact that this member suppresses any need of manually inserting and positioning the metallic components in a loose condition so as to perform manufacturing of the co-moulding articles. Moreover, contrary to co-moulded articles according to traditional systems, the finished articles according to the invention are totally deprived of holes or communication passageways between the metallic components and the outside environment across the body 2, which constitutes a relevant qualification in case the co-moulded article is to be part of an electrical machine such as motor-vehicle alternators and the like.

Naturally the details of construction and the embodiment may be widely varied with respect to what has been disclosed and illustrated, without thereby departing from the scope of the present invention, such as defined in the appended claims.

## Claims

1. Method for the manufacturing of a co-moulded article (1) including at least one metallic component (5a-5d) embodied within or covered by a body of moulded thermoplastic material (2), wherein said at least one metallic component (5a-5d) is fitted into and held in position within the cavity of a mould into which thermoplastic material is subsequently supplied for moulding thereof over said at least one metallic component (5a-5d), characterised in that it comprises the steps of providing a prefabricated mounting member (6), positioning and retaining said at least one metallic component (5a-5d) relatively to said mounting member (6), and introducing said mounting member (6) into the mould together with said at least one metallic component (5a-5d) so retained.

2. Method according to claim 1, characterised in that said mounting member (6) is formed with positioning seats (10a-10d) for said at least one metallic component (5a-5d).

3. Method according to claim 1 or claim 2, characterised in that said mounting member (6) is formed with snap-fit locking means (11,12) of said at least one metallic component (5a-5d).

4. Method according to any of claims 1 through 3, characterised in that said mounting member (6) is constituted by two substantially sheet like symmetrical portions (7,8) designed to be mutually superimposed and snap-fit coupled following insertion of said at least one metallic component (5a-5d) therebetween.

5. Method according to claim 4, characterised in that said two portions (7,8) of said prefabricated mounting member (6) are made of moulded plastic material and are joined to each other through a flexible hinge (9).

6. Method according to claim 4, characterised in that said two portions (7,8) of said prefabricated mounting member (6) are formed with integral outer projections (13).

7. Method according to any of the preceding claims for the manufacturing of a motor-vehicle alternator component.

8. Device for the manufacturing of a co-moulded article (1) including at least one metallic component (5a-5d) embodied within or covered by a body of thermoplastic moulded material (2), in which said at least one metallic component (5a-5d) is placed into and held within the cavity of a mould into which thermoplastic material is subsequently supplied for co-moulding thereof over said at least one metallic component (5a-5d), characterised in that is comprises a prefabricated mounting member (6) designed for the positioning and holding of said at least one metallic component (5a-5d) so as to define therewith a pre-assembled sub-assembly (16) to be inserted into the cavity of said co-moulding mould.

9. Device according to claim 8, characterised in that said mounting member (6) is formed with positioning seats (10-10d) of said at least one metallic component (5a-5d).

10. Device according to claim 8 or claim 9, characterised in that said mounting member (6) is formed with snap-fit locking means (11,12) of said at least one metallic component (5a-5d).

11. Device according to any of claim 8 through 10, characterised in that said mounting member (6) is constituted by two substantially sheet-like symmetrical portions (7,8) designed to be mutually superimposed and snap-fit coupled following insertion of said at least one metallic component (5a-5d) therebetween.

12. Device according to claim 11, characterised in that said two portions (7,8) of said prefabricated mounting member (6) are made of moulded plastic material and are joined to each other through a flexible hinge (9).

13. Device according to claim 11, characterised in that said two portions (7,8) of said prefabricated mounting member (6) are formed with integral outer projections (13).

14. Device according to claim 11, characterised in that said two portions (7,8) of said prefabricated mounting member (6) are formed with corresponding through openings (14,15).
